# FASCICULE DE BREVET EUROPEEN

(11) **EP 2 998 263 B1**
(45) Date de publication et mention de la délivrance du brevet: **13.02.2019**
(21) Numéro de dépôt: 14197300.8
(22) Date de dépôt: 11.12.2014
(51) Int. Cl.: B66C 23/18, B66C 23/88, H02G 7/18, H02G 1/04

(54) **Dispositif et procédé de protection d'un terrain lors de travaux de maintenance sur des lignes électriques aériennes**
Schutzvorrichtung und Schutzverfahren eines Gebiets während der Wartungsarbeiten an elektrischen Oberleitungen
Device and method for protecting a terrain during maintenance work on overhead power lines

(30) Priorité: 06.08.2014 FR 1457661
(43) Date de publication de la demande: 23.03.2016
(73) Titulaire: Vayssade, Fabrice, 38240 Meylan (FR)
(72) Inventeur: Vayssade, Fabrice, 38240 Meylan (FR)
(74) Mandataire: Talbot, Alexandre

(56) Documents cités:
- FR-A1- 2 778 193
- FR-A1- 2 967 526
- DATABASE WPI Week 201335 Thomson Scientific, London, GB; AN 2013-G84939 XP002751917, -& CN 102 904 194 A (TIANJIN ELECTRIC POWER TRANSMISSION) 30 janvier 2013 (2013-01-30)

## Description

### Domaine technique de l'invention

L'invention est relative à un dispositif de protection d'un terrain, notamment lors de travaux de maintenance de lignes électriques aériennes passant au-dessus dudit terrain.

### État de la technique

Le réseau formé par des lignes aériennes haute tension est amené à traverser plusieurs terrains pouvant comporter une portion d'une route, d'une autoroute, d'une voie ferrée, ou encore une construction. Lors d'un montage ou d'une maintenance de ces lignes aux points d'intersection avec ces terrains, un problème est rencontré. Il est lié à la sécurité des personnes et/ou des installations pouvant être situés dans ces terrains.

En effet, au cours des opérations de montage ou de maintenance, il faut, soit interrompre l'activité dans les terrains traversés par ces lignes aériennes, soit les protéger. Une telle interruption de l'activité peut s'avérer gênante pour les personnes et pénalisante, d'un point de vue financier, pour l'exploitant de ces installations.

Pour la protection d'ouvrages, la plupart des techniques connues utilisent des échafaudages. Ces techniques nécessitent une interruption plus ou moins longue de l'activité au sein du terrain comportant l'ouvrage pour pouvoir installer les échafaudages.

Le brevet FR2778193 propose un dispositif de protection permettant de s'affranchir d'une interruption, même temporaire, de l'activité au sein de l'ouvrage. Il s'agit d'un dispositif de passerelle, transportable et dépliable, destiné à protéger un ouvrage. Le dispositif comprend une jambe dépliable, et articulée à l'extrémité d'une passerelle constituée par une flèche d'un appareil de levage.

Ce type de dispositif reste néanmoins complexe. En effet, afin de déplier et replier la passerelle et la jambe, le dispositif comporte plusieurs câbles et vérins disposés au-dessus de la passerelle et de la jambe.

Par ailleurs, les lignes haute tension récentes comportent un gainage en aluminium fragile. Dans ces conditions, une vigilance particulière doit accompagner les opérations de maintenance ou de montage pour éviter les câbles et vérins disposés au-dessus de la passerelle. Le risque d'accident est ainsi augmenté, et la tâche des ouvriers en charge de ces opérations devient alors plus compliquée et le temps d'intervention sur les lignes de haute tension peut être allongé.

En outre, ce type de dispositif peut également rencontrer un problème lié à la stabilité et la solidité de la passerelle en cas d'une utilisation dans des conditions extrêmes, telles qu'un vent fort, ou une chute de câbles électriques, etc...

En effet, le dispositif est de structure légère et fragile. La jambe dépliable ne comporte, à son extrémité, qu'une simple platine qui lui sert d'appui et qui permet son positionnement sur le sol. La jambe ne contribue pas à retenir le dispositif lorsqu'il est sollicité latéralement, par exemple en cas de vent. Pour assurer le maintien latéral de la jambe dans ces conditions, des haubans supplémentaires sont utilisés.

La passerelle du dispositif, telle qu'elle est décrite, ne peut atteindre une hauteur, au-dessus du sol supportant l'appareil de levage, au-delà de 30 mètres. Cette hauteur peut s'avérer insuffisante, par exemple, lorsqu'il y a un grand dénivelé entre le plan de la voie et le plan d'installation de l'appareil de levage. Par ailleurs une hauteur insuffisante peut impacter négativement l'activité au sein de l'ouvrage à protéger par le dispositif de protection. Lors d'une protection de voie, par exemple, une hauteur insuffisante peut nécessiter un ralentissement des véhicules passant sous la passerelle, pour diminuer l'effet de souffle.

Le brevet CN 102904194 divulgue un dispositif de protection de terrain comportant deux véhicules, chacun muni d'une flèche.

### Objet de l'invention

Lors de certaines opérations de montage et/ou de maintenance de lignes électriques aériennes, il existe un besoin de fournir un dispositif solide pouvant être installé rapidement et facilement pour protéger et sécuriser un terrain comportant une portion d'une voie ou une installation sans interrompre son activité normale.

On tend vers cet objectif en prévoyant un dispositif de protection d'un terrain, comportant au moins une première et une deuxième grues mobiles munies respectivement de première et deuxième flèches. Les première et deuxième grues mobiles sont disposées de sorte qu'un pont de protection, disposé sur les première et deuxième flèches, enjambe ledit terrain.

Selon un mode de réalisation, le pont de protection est articulé à l'extrémité de la première flèche.

De manière avantageuse, le dispositif de protection comporte des tiges transversales montées sur le pont de protection qui s'étend longitudinalement de la première flèche vers la deuxième flèche.

De manière préférentielle, les tiges sont disposées sur le pont de protection de sorte qu'elles soient régulièrement espacées et/ou disposées au-dessus du plan horizontal comportant le pont de protection.

Selon un autre mode de réalisation, le pont de protection est articulé à l'extrémité de la première flèche, et la deuxième grue mobile comporte un élément de connexion configuré pour recevoir le pont de protection.

Selon un développement, l'élément de connexion est disposé sur la deuxième flèche.

Selon un perfectionnement, la deuxième grue mobile comporte une extension de flèche articulée à l'extrémité de la deuxième flèche, et l'élément de connexion est monté à l'extrémité de ladite extension de flèche.

En outre, on prévoit un procédé de protection d'un terrain comportant les étapes suivantes :
- placer une première grue mobile à un premier côté du terrain, la première grue mobile comportant une première flèche ;
- placer une deuxième grue mobile à un deuxième côté du terrain de sorte que le terrain soit situé entre lesdits premier et deuxième côtés, la deuxième grue mobile comportant une deuxième flèche ;
- monter un pont de protection sur les première et deuxième flèches de sorte que le pont de protection enjambe ledit terrain.

Selon un autre mode de réalisation, le pont de protection est monté de sorte qu'il soit articulé à une extrémité de la première flèche et le procédé de protection comporte une étape de pivotement du pont de protection jusqu'à ce qu'il repose sur la deuxième grue mobile.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente une vue de côté schématique d'un dispositif de protection selon un premier mode de réalisation ;
- les figures 2 et 3 représentent une vue de face schématique d'un pont de protection selon deux modes particuliers de réalisation ; et
- la figure 4 représente une vue de côté schématique d'un dispositif de protection selon un autre mode de réalisation.

### Description de modes préférentiels de réalisation

Pour assurer une protection et sécuriser un terrain comportant une portion d'une voie ou une installation, notamment lors de travaux de maintenance de lignes électriques aériennes, il est préférable d'utiliser un dispositif solide pouvant être installé de manière facile et rapide.

On tend à satisfaire ces exigences en prévoyant un dispositif de protection tirant profit de la robustesse et de la mobilité d'au moins deux grues automotrices, usuellement appelées grues mobiles.

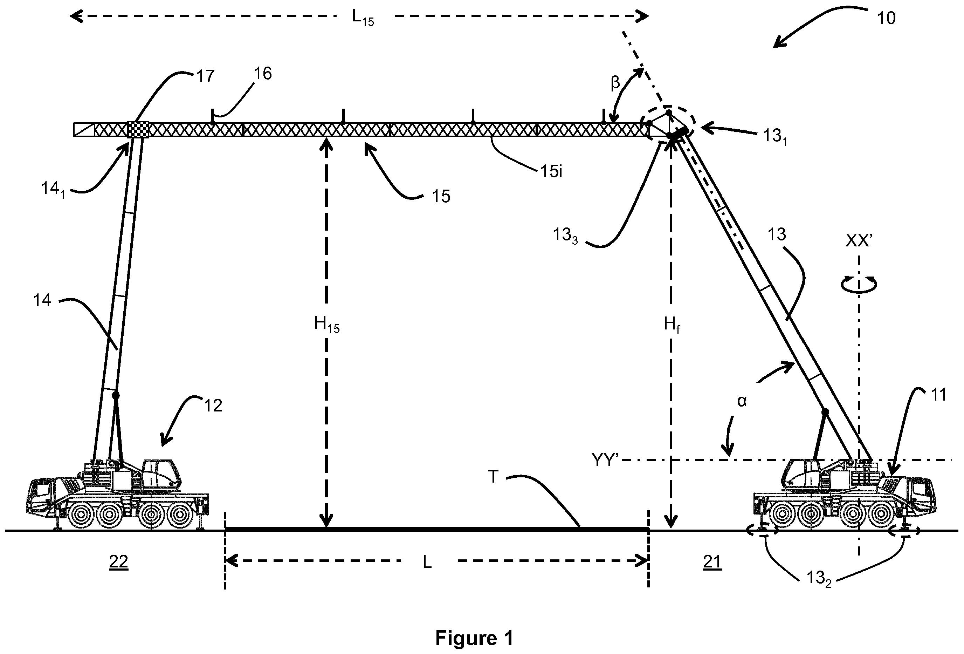

La figure 1 représente une vue de côté d'un dispositif de protection 10 d'un terrain T. Le dispositif 10 comporte une première 11 et une deuxième 12 grues mobiles munies respectivement de première 13 et deuxième 14 flèches, au bout desquelles on retrouve respectivement les têtes de flèche 13₁ et 14₁.

Par grue mobile on entend une grue munie de moyens de déplacement comportant généralement des roues et/ou des chenilles. Une grue mobile se déplace de manière autonome et elle est prête à l'emploi, contrairement à une grue à tour qui est fixe et nécessite une étape d'assemblage sur les lieux des opérations. Préférentiellement, les grues mobiles 11 et 12 sont totalement autonomes, elles n'ont pas besoin de rails pour guider leurs déplacements.

Les flèches 13 et 14 des grues mobiles 11 et 12 peuvent être pliables ou télescopiques. On peut utiliser des grues mobiles ayant des flèches pouvant atteindre jusqu'à 60 m voire 80 m de longueur. Les têtes de flèche 13₁ et 14₁ peuvent ainsi atteindre, pour certaines grues mobiles classiques, jusqu'à 60 m de hauteur. La hauteur H_{f} de la tête de flèche est mesurée par rapport au plan d'appui sur lequel la grue mobile est stabilisée. Des moyens tels que des poutres, des vérins et des patins d'appui 13₂ peuvent être utilisés pour la stabilisation de la grue mobile.

La grue mobile (11, 12) comporte généralement des moyens mécaniques de rotation permettant à sa flèche (13, 14) de tourner autour d'un axe vertical (XX') et de former un angle α avec un axe horizontal (YY'). L'angle α peut atteindre 80°, permettant ainsi à la tête de flèche d'atteindre une hauteur presque égale à la longueur de la flèche, autrement dit une hauteur avoisinant 60 m.

De manière usuelle, une grue mobile comporte un moufle avec crochet destiné au levage et au déplacement de charges dans un terrain d'opération tel qu'un chantier de construction. Selon l'invention, les grues mobiles 11 et 12 sont utilisées principalement pour former une protection contre la chute de divers éléments sur le terrain T à protéger. Autrement dit, les grues mobiles peuvent être dispensées des fonctions de levage et de déplacement de charges dans, vers ou depuis le terrain T.

Le dispositif 10 comporte également un pont de protection 15 disposé sur les première 13 et deuxième 14 flèches. Comme illustré à la figure 1, les première 11 et deuxième 12 grues mobiles sont disposées de manière que le pont de protection 15 enjambe le terrain T. Le pont de protection 15 est ainsi placé à une hauteur H₁₅ du terrain T.

A titre d'exemple, les grues 11 et 12 sont placées de part et d'autre du terrain T, qui est ainsi localisé entre les deux grues. De manière préférentielle, les flèches 13 et 14 sont déployées de sorte que les têtes de flèche 13₁ et 14₁ appartiennent à un plan sensiblement horizontal. De ce fait, le pont de protection 15, monté sur les têtes de flèche 13₁ et 14₁ est disposé au dessus du terrain T, et il est sensiblement horizontal.

Le pont de protection 15 peut être en treillis d'acier. De manière préférentielle, le pont 15 comporte plusieurs éléments 15ᵢ mécano soudés, de dimensions identiques ou variables. Les dimensions et le nombre des éléments 15ᵢ formant le pont de protection 15 dépendent de la largeur L du terrain à protéger ainsi que des caractéristiques techniques des grues mobiles 11 et 12 utilisées. Notamment, les longueurs des flèches et leurs caractéristiques mécaniques qui déterminent le poids limite à supporter par les première 13 et deuxième 14 flèches, tout en assurant l'équilibre et la stabilité du dispositif 10.

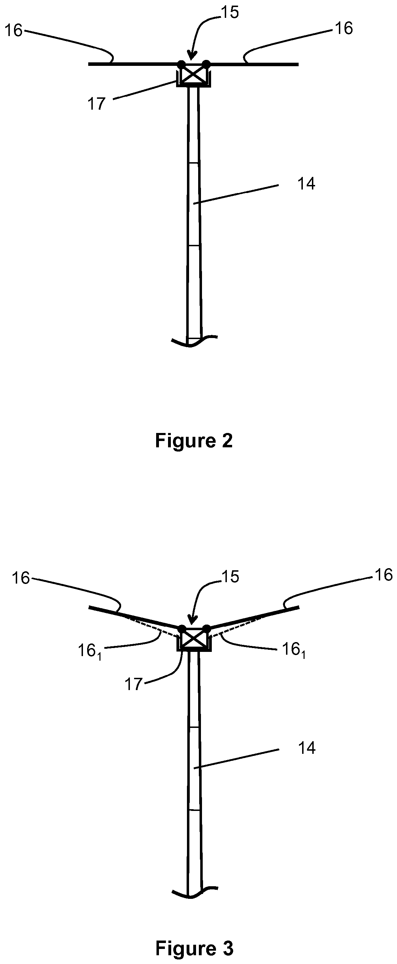

Comme illustré aux figures 1 et 2, le pont de protection 15 s'étend longitudinalement de la première flèche 13 vers la deuxième flèche 14 et comporte des tiges transversales 16. Préférentiellement, les tiges 16 sont montées sur la partie supérieure du pont de protection 15 et appartiennent au plan horizontal comportant le pont de protection 15.

De manière avantageuse, les tiges 16 sont disposées de sorte qu'elles soient régulièrement espacées. Par ailleurs, les tiges 16 peuvent être reliées au pont de protection et/ou entre elles à l'aide de tirants 16₁ pour renforcer le maintien latéral.

Le pont de protection 15 peut présenter une ossature pour des moyens de couverture configurée pour protéger le terrain T. Les moyens de couverture peuvent comporter des plaques ou des filets s'étendant de manière transversale par rapport au pont de protection 15.

Avantageusement, le pont de protection 15 comportant les moyens de couverture, s'interpose entre le terrain T et des éléments pouvant chuter d'une position ayant une hauteur supérieure à la hauteur H₁₅. Autrement dit, les moyens de couverture appartenant au pont de protection 15 permettent la réception desdits éléments en cas de chute, les empêchant ainsi d'atteindre le terrain T.

Comme exemple d'utilisation, le dispositif de protection 10 peut être installé, de manière avantageuse lors de la maintenance, de l'installation ou de l'enlèvement de lignes électriques aériennes passant au-dessus d'un terrain T. Le dispositif 10 permet ainsi de protéger le terrain T pouvant comporter une portion d'une voie routière ou ferroviaire, une installation, un chantier, etc. Dans ces conditions, le pont de protection 15 reçoit les lignes électriques aériennes et les empêche de gêner, par exemple, la circulation au sein de la voie, ou l'activité au sein de l'installation ou du chantier.

Selon une variante illustrée à la figure 3, les tiges transversales 16 sont disposées au-dessus du plan horizontal comportant le pont de protection 15. Autrement dit, les tiges 16 sont montées sur le pont de protection 15 de manière inclinée. Cette configuration est avantageusement utile et permet de ramener les lignes électriques réceptionnées par le pont de protection au centre. Ainsi, l'effort sera concentré sur la structure centrale du pont 15 et non sur les tiges transversales 16.

Par ailleurs, le dispositif 10 peut également être utilisé pour protéger une installation contre la chute de débris provenant d'une construction ou d'un chantier situé à une hauteur supérieure à la hauteur H₁₅.

Grâce au caractère mobile des deux grues 11 et 12, le dispositif de protection 10 peut être installé rapidement et facilement. En effet, les grues mobiles 11 et 12 peuvent être conduites à l'endroit du terrain T et placées de sorte que le terrain soit situé entre les deux grues. Après le déploiement rapide des flèches 13 et 14 et la disposition du pont de protection 15, le dispositif 10 est prêt à l'emploi.

Par ailleurs, en cas de besoin, la deuxième grue mobile 12 peut être remplacée par une plateforme élévatrice. En effet, si la hauteur visée du pont de protection n'est pas importante, ou si le terrain est difficile d'accès pour une grue mobile, on peut avantageusement utiliser une plateforme élévatrice 12.

Le dispositif 10 ainsi installé, ne présente aucune gêne pour l'activité au sein du terrain T. Cette activité peut continuer même lors de l'installation du dispositif, ou alors peut être interrompue uniquement pendant une courte durée : pendant la disposition du pont de protection 15 sur les flèches 13 et 14.

Actuellement on peut disposer de grues mobiles munies de flèches télescopiques, longues et mécaniquement solides pouvant supporter des charges de quelques tonnes voire une dizaine de tonnes. En utilisant ce type de grues mobiles et un pont de protection préférentiellement en treillis, on obtient un dispositif de protection 10 robuste, efficace et fiable. En outre, le pont de protection 15 peut être disposé à des hauteurs importantes pouvant atteindre 60 m si besoin.

Ainsi, le dispositif de protection peut être utilisé de manière avantageuse, en présence d'un vent fort, ou pour réceptionner des câbles électriques ou des débris lourds.

Selon un autre mode de réalisation, le pont de protection 15 est articulé à l'extrémité de la première flèche 13. En fait, la plupart des grues mobiles dispose d'une option d'extension de flèche à base d'un ou plusieurs éléments en treillis. Ce type d'extension, dit de manière usuelle fléchette en treillis, est articulé à l'extrémité de la flèche, autrement dit à la tête de flèche.

De ce fait, il n'est pas nécessaire de prévoir ni de réaliser un élément spécifique pour former le pont de protection. Il suffit d'adapter la fléchette en treillis d'une des deux grues mobiles, ce qui facilite davantage l'installation du dispositif de protection 10.

Comme illustré à la figure 1, l'extension de la flèche *i.e.* le pont 15, est articulé de manière à former un angle β avec la première flèche 13. Généralement, l'angle β ne peut dépasser un angle limite βₘₐₓ de l'ordre de 70°, qui dépend notamment du poids du pont de protection 15 et de sa longueur L₁₅.

Autrement dit, la disposition du pont de protection (l'angle β), et ses caractéristiques (longueur, poids, capacité de charge) dépendent des caractéristiques techniques des deux grues mobiles telle que la longueur de la flèche, le diagramme de levage lorsqu'une extension est montée, etc.

Selon les conditions d'utilisation visées, on choisira deux grues mobiles 11 et 12 avec les caractéristiques techniques adéquates pour réaliser le dispositif de protection du terrain T. Les flèches 13 et 14 seront déployées selon des longueurs et des angles définis pour supporter le pont de protection 15 ayant une longueur prédéfini L₁₅ à la hauteur voulue H₁₅.

Selon un mode de réalisation préférentiel, la deuxième grue mobile 12 comporte un élément de connexion 17 configuré pour recevoir le pont de protection 15. L'élément de connexion peut être disposé sur la deuxième flèche, autrement dit en tête de flèche 14₁.

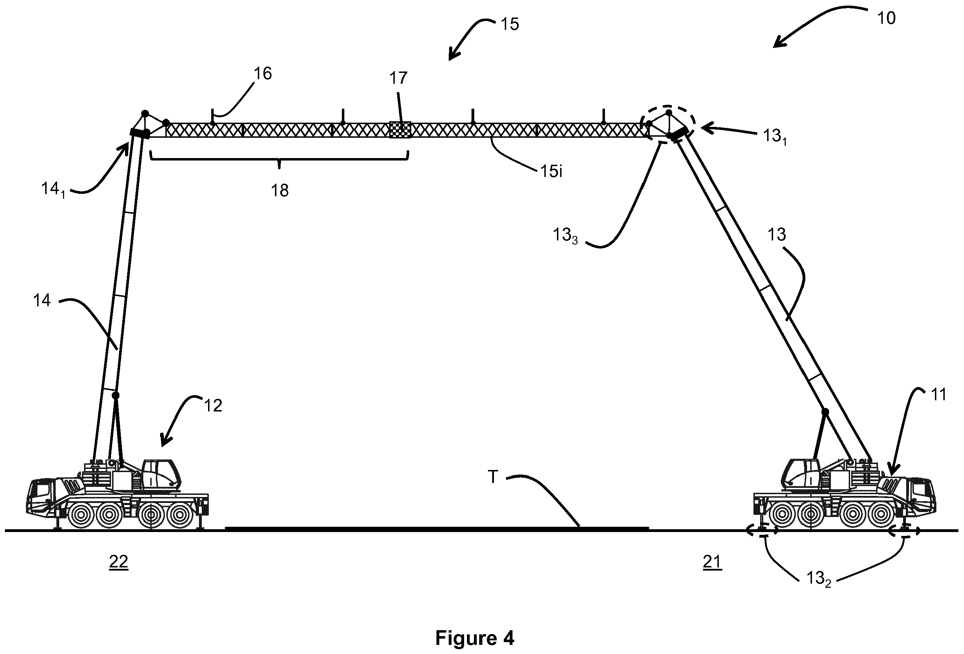

Selon une variante illustrée à la figure 4, la deuxième grue mobile 12 comporte une extension de flèche 18 articulée à l'extrémité de la deuxième flèche 14, *i.e.* en tête de flèche 14₁. L'élément de connexion 17 est monté à l'extrémité de l'extension de flèche 18 de sorte à recevoir le pont de protection 15. Cette configuration permet de manière avantageuse d'utiliser deux grues mobiles en adaptant leurs fléchettes, tout en réalisant un pont de protection 15 ayant une longueur importante.

Selon un exemple de réalisation, la première grue mobile 11 est une grue classique ayant une capacité de levage de 100 tonnes. La première grue comporte des moyens d'articulation 13₃ hydrauliques permettant à une extension de flèche à former un angle β compris entre 0 et 45°. Le pont de protection 15 est formé par quatre éléments 15ᵢ en treillis d'une longueur de 8 m chacun. Le pont de protection est articulé sur la première flèche 13 via les moyens d'articulation 13₃.

Par ailleurs, huit tiges transversales 16 sont montées sur le pont 15 de manière espacée. Les tiges 16 sont espacées d'environ 4,5 m, et elles ont des longueurs d'environ 9 m, permettant une largeur de couverture d'environ 18 m.

La deuxième grue mobile 12 est une grue ayant une capacité de levage de 50 ou de 80 tonnes. Elle est configurée pour réceptionner l'extrémité libre du pont 15 articulé sur la première flèche 13.

L'association des grues mobiles a permis de réaliser un dispositif de protection ayant un pont d'une longueur d'environ 40 m enjambant un terrain à protéger. Le pont de protection est disposé à une hauteur d'environ 60 m.

Pour satisfaire les exigences citées ci-dessus, on prévoit également un procédé de protection d'un terrain T. Le procédé comporte une première étape consistant à placer une première grue mobile 11, munie d'une première flèche 13, à un premier côté 21 du terrain T.

De manière analogue, une deuxième grue mobile 12 est placée à un deuxième côté 22 du terrain T. Les premiers 21 et deuxième 22 côtés, sont opposés par rapport au terrain T. Autrement dit, les emplacements des première 11 et deuxième 12 grues mobiles, sont choisis de sorte que le terrain à protéger soit situé entre les deux côtés. La deuxième grue 12 est également équipée d'une deuxième flèche 14.

Après le placement des grues mobiles 11 et 12, un pont de protection 15 est monté sur les première 13 et deuxième 14 flèches de sorte qu'il enjambe le terrain 20 à protéger.

Le pont de protection peut être assemblé à proximité d'une des deux grues mobiles 11 et 12, en dehors du terrain 20. Ensuite, le pont assemblé 15 est disposé, par exemple à l'aide d'une troisième grue sur les première 13 et deuxièmes 14 flèches.

Selon un mode de réalisation préférentielle, on prévoit un pont de protection 15 articulé à l'extrémité de la première flèche 13₁. Le pont de protection 15 est ensuite pivoté de sorte qu'il repose sur la deuxième grue mobile 14.

Le procédé de protection est facile à réaliser et permet de réaliser une protection robuste et fiable. Les étapes de réalisation du procédé peuvent être mises en oeuvre en limitant le temps d'interruption, voire même sans interrompre l'activité au sein du terrain T.

## Revendications

1. Dispositif de protection (10) d'un terrain, comportant :
• une première (11) et une deuxième (12) grues mobiles munies respectivement de première (13) et deuxième (14) flèches ;
• un pont de protection (15) disposé sur les première (13) et deuxième (14) flèches ;
les première (11) et deuxième (12) grues mobiles sont disposées de sorte que le pont de protection (15) enjambe ledit terrain.

2. Dispositif de protection selon la revendication 1, dans lequel le pont de protection (15) est articulé à l'extrémité de la première flèche (13).

3. Dispositif de protection selon la revendication 1, dans lequel le pont de protection (15) s'étend longitudinalement de la première flèche (13) vers la deuxième flèche (14), le dispositif de protection comportant des tiges transversales (16) montées sur le pont de protection (15).

4. Dispositif de protection selon la revendication 3, dans lequel les tiges (16) sont disposées sur le pont de protection (15) de sorte qu'elles soient régulièrement espacées.

5. Dispositif de protection selon la revendication 3, dans lequel les tiges (16) sont disposées au-dessus du plan horizontal comportant le pont de protection (15).

6. Dispositif de protection selon la revendication 2, dans lequel la deuxième grue mobile (12) comporte un élément de connexion (17) configuré pour recevoir le pont de protection (15).

7. Dispositif de protection selon la revendication 6, dans lequel l'élément de connexion (17) est disposé sur la deuxième flèche (14).

8. Dispositif de protection selon la revendication 6, dans lequel la deuxième grue mobile (12) comporte une extension de flèche (18) articulée à l'extrémité de la deuxième flèche (14), l'élément de connexion (17) étant monté à l'extrémité de ladite extension de flèche (18).

9. Procédé de protection d'un terrain (T) comportant les étapes suivantes :
• placer une première grue mobile (11) à un premier côté (21) du terrain (T), la première grue mobile (11) comportant une première flèche (13) ;
• placer une deuxième grue mobile (12) à un deuxième côté (22) du terrain (T) de sorte que le terrain (T) soit situé entre lesdits premier (21) et deuxième (22) côtés, la deuxième grue mobile (12) comportant une deuxième flèche (14) ;
• monter un pont de protection (15) sur les première (13) et deuxième (14) flèches de sorte que le pont de protection (15) enjambe ledit terrain (T).

10. Procédé de protection selon la revendication 9, comportant les étapes suivantes :
• prévoir le pont de protection (15) de manière qu'il soit articulé à une extrémité de la première flèche (13) ;
• pivoter le pont de protection (15) de manière qu'il repose sur la deuxième grue mobile (12).

## Patentansprüche

1. Vorrichtung (10) zum Schutz eines Geländes, die umfasst:
• einen ersten (11) und einen zweiten (12) mobilen Kran, die jeweils mit einem ersten (13) und einem zweiten (14) Ausleger ausgestattet sind;
• eine Schutzbrücke (15), die auf dem ersten (13) und zweiten (14) Aufleger angeordnet ist;
wobei erster (11) und zweiter (12) mobiler Kran so angeordnet sind, dass die Schutzbrücke (15) das Gelände überspannt.

2. Schutzvorrichtung nach Anspruch 1, bei der die Schutzbrücke (15) an das Ende des ersten Auslegers (13) angelenkt ist.

3. Schutzvorrichtung nach Anspruch 1, bei der sich die Schutzbrücke (15) der Länge nach vom ersten Ausleger (13) zum zweiten Ausleger (14) erstreckt, wobei die Schutzvorrichtung transversale Stangen (16) aufweist, die auf die Schutzbrücke (15) montiert sind.

4. Schutzvorrichtung nach Anspruch 3, bei der die Stangen (16) so auf der Schutzbrücke (15) montiert sind, dass sie sich in gleichmäßigem Abstand voneinander befinden.

5. Schutzvorrichtung nach Anspruch 3, bei der die Stangen (16) über der Horizontalebene angeordnet sind, die die Schutzbrücke (15) umfasst.

6. Schutzvorrichtung nach Anspruch 2, bei der der zweite mobile Kran (12) ein Verbindungselement (17) umfasst, das so vorgesehen ist, dass es die Schutzbrücke (15) aufnehmen kann.

7. Schutzvorrichtung nach Anspruch 6, bei der das Verbindungselement (17) auf dem zweiten Ausleger (14) angeordnet ist.

8. Schutzvorrichtung nach Anspruch 6, bei der der zweite mobile Kran (12) eine Auslegerverlängerung (18) umfasst, die an das Ende des zweiten Auslegers (14) angelenkt ist, wobei das Verbindungselement (17) an das Ende der Auslegerverlängerung (18) montiert ist.

9. Verfahren zum Schutz eines Geländes (T), das folgende Schritte umfasst:
• Platzieren eines ersten mobilen Krans (11) auf einer ersten Seite (21) des Geländes (T), wobei der erste mobile Kran (11) einen ersten Ausleger (13) umfasst;
• Platzieren eines zweiten mobilen Krans (12) an einer zweiten Seite (22) des Geländes (T), sodass sich das Gelände (T) zwischen der ersten (21) und der zweiten (22) Seite befindet, wobei der zweite mobile Kran (12) einen zweiten Ausleger (14) umfasst;
• Montieren einer Schutzbrücke (15) auf dem ersten (13) und zweiten (14) Ausleger, sodass die Schutzbrücke (15) das Gelände (T) überspannt.

10. Schutzverfahren nach Anspruch 9, das folgende Schritte umfasst:
• Anordnen der Schutzbrücke (15) in der Weise, dass sie an einem Ende des ersten Auslegers (13) angelenkt ist;
• Schwenken der Schutzbrücke (15) in der Weise, dass sie auf dem zweiten mobilen Kran (12) aufliegt.

## Claims

1. Device (10) for protecting a terrain, comprising:
- a first mobile crane (11) and a second mobile crane (12) respectively equipped with a first boom (13) and a second boom (14);
- a protective bridge (15) arranged on the first boom (13) and the second boom (14);
the first mobile crane (11) and second mobile crane (12) being arranged in such a way that the protective bridge (15) straddles said terrain.

2. Device for protecting according to claim 1, wherein the protective bridge (15) is articulated on the end of the first boom (13).

3. Device for protecting according to claim 1, wherein the protective bridge (15) extends longitudinally from the first boom (13) to the second boom (14), the protection device comprising transverse struts (16) mounted on the protective bridge (15).

4. Device for protecting according to claim 3, wherein the struts (16) are arranged on the protective bridge (15) in such a way that they are spaced apart regularly.

5. Protection device according to claim 3, wherein the struts (16) are located above the horizontal plane containing the protective bridge (15).

6. Device for protecting according to claim 2, wherein the second mobile crane (12) comprises a connecting part (17) configured to receive the protective bridge (15).

7. Device for protecting according to claim 6, wherein the connecting part (17) is arranged on the second boom (14).

8. Device for protecting according to claim 6, wherein the second mobile crane (12) comprises a jib (18) articulated on the end of the second boom (14), the connecting part (17) being mounted on the end of said jib (18).

9. Method for protecting a terrain (T) comprising the following steps:
• placing a first mobile crane (11) on a first side (21) of the terrain (T), the first mobile crane (11) comprising a first boom (13);
• placing a second mobile crane (12) on a second side (22) of the terrain (T) so that the terrain (T) is situated between said first side (21) and second side (22), the second mobile crane (12) comprising a second boom (14);
• assembling a protective bridge (15) on the first boom (13) and second boom (14) so that the protective bridge (15) straddles said terrain (T).

10. Method for protecting according to claim 9, comprising the following steps:
• providing the protective bridge (15) so that it is articulated on one end of the first boom (13);
• swivelling the protective bridge (15) so that it rests on the second mobile crane (12).
